# EUROPEAN PATENT SPECIFICATION

(11) **EP 3 860 216 B1**
(45) Date of publication and mention of the grant of the patent: **14.10.2026**
(21) Application number: 19864980.8
(22) Date of filing: 27.09.2019
(51) Int. Cl.: H04W 36/00, H04W 36/08, H04W 36/26

(54) **HANDOVER WITH MAINTENANCE OF LEVEL OF SERVICE**
WEITERREICHEN MIT AUFRECHTERHALTUNG DES DIENSTNIVEAUS
TRANSFERT AVEC MAINTENANCE DU NIVEAU DE SERVICE

(30) Priority: 27.09.2018 KR 20180115105
(43) Date of publication of application: 04.08.2021
(73) Proprietor: SK TELECOM CO., LTD., Seoul 04539 (KR)
(72) Inventor: LEE, Dong Jin, Seoul 04539 (KR)
(74) Representative: Isarpatent
(86) International application number: PCT/KR2019/012549
(87) International publication number: WO 2020/067746

(56) References cited:
- KR-A- 20160 092 389
- KR-B1- 101 722 764
- US-A1- 2010 189 074
- US-A1- 2013 229 939
- US-A1- 2014 086 159
- "3rd Generation Partnership Project; Technical Specification Group Services and System Aspects; Study on enhancement of Ultra-Reliable Low-Latency Communication (URLLC) support in the 5G Core network (5GC) (Release 16)", 3GPP TR 23.725 V1.0.0, 8 September 2018 (2018-09-08), XP055700025
- "3rd Generation Partnership Project; Technical Specification Group Services and System Aspects; Procedures for the 5G System; Stage 2 (Release 15)", 3GPP TS 23.502 V15.3.0, 17 September 2018 (2018-09-17), XP051477324

## Description

### Cross-Reference to Related Application

This application claims priority to Korean Patent Application No. 10-2018-0115105, filed on September 27, 2018.

### TECHNICAL FIELD

The present disclosure relates to a handover management method.

### BACKGROUND

In the LTE communication system, as a type of a communication service and requiring data rate, etc. are diversified, expansion of the LTE frequency and evolution to the 5G communication system are actively progressing.

The rapidly evolving 5G communication system not only accommodates as many user equipments as possible based on limited radio resources but also supports scenarios of enhanced mobile broadband (eMBB), massive machine type communications (mMTC), and ultra-reliable and low latency communications (URLLC).

In the 5G communication system, the network structure to support, from end to end, the user equipments, base stations (radio access networks), cores, and servers is defined, and a network structure that separates the Control Plane for the control signaling functions and the User Plane for the data transmission/reception functions is defined by separating the control signaling functions and data transmission/reception functions performed by a single node (e.g., S-GW, P-GW, etc.) in the existing LTE (4G) communication system.

In this case, various nodes are included in the Control Plane. For example, the Access and Mobility Management Function (AMF) that controls wireless access of the user equipment, the Policy Control Function (PCF) that manages/controls policies such as user equipment information and subscription service information for each user equipment, billing, and the like, the Session Management Function (SMF) that manages/controls a session for using data services for each user equipment, and the Network Exposure Function (NEF) that performs an information sharing function with an external network may be included in the Control Plane.

In addition, functions such as the User Plane Function (UPF) may be included in the User Plane.

US 2013/229939 A1 provides measures for handover control for backhaul connections, said measures exemplarily including evaluation of the suitability of an access node cell in access network as target for a handover of a terminal based on delay information being indicative of an expected packet delay in a cell of the access node, wherein such delay information may be generated and/or exchanged in the access network.

### SUMMARY

In the 5G communication system, handover may be performed for a user equipment. If an Ultra-Reliable and Low Latency Communication (URLLC) service is being provided to the user equipment at the time when the handover is to be performed, it is desirable for the user equipment to receive, after the handover, the URLLC service of the same quality as that provided before the handover. In other words, even if the handover is performed, the URLLC service may be provided to the user equipment without interruption, and there may be no delay in terms of performance or a rate when the URLLC service is provided.

The present invention is set out by the appended claims. Advantageous embodiments are provided in dependent claims.

In accordance with the present invention, there is provided a handover management method performed by a session management function (SMF) in 5G communication system, as defined by independent claim 1.

According to an embodiment, a resource in a source base station used to provide the URLLC service may be secured in a target base station at the time or before the time when the handover to the target base station is completed for a user equipment accessing the source base station and receiving the URLLC service. Accordingly, the URLLC service having the same quality as the URLLC service provided to the user equipment before the handover is performed may be provided even after the handover.

### BRIEF DESCRIPTION OF THE DRAWINGS

Fig. 1 shows a diagram conceptually illustrating an architecture of the 5G communication system according to an embodiment.
Fig. 2 shows a diagram illustrating a part of the architecture of the 5G communication system illustrated in Fig. 1.
Fig. 3 shows a flowchart illustrating a handover management method according to an embodiment.
Fig. 4 shows a table illustrating resource information regarding a resource of a source base station that is measured at the source base station and used by a user equipment by accessing the source base station.
Fig. 5 shows a table illustrating information included in a handover support request that a source base station transmits to an AMF.
Fig. 6 shows a table illustrating resource status information of a target base station that an UPF obtained from the target base station.

### DETAILED DESCRIPTION

The advantages and features of the present disclosure and the methods of accomplishing these will be clearly understood from the following description taken in conjunction with the accompanying drawings. However, embodiments are not limited to those embodiments described, as embodiments may be implemented in various forms. It should be noted that the present embodiments are provided to make a full disclosure and also to allow those skilled in the art to know the full range of the embodiments. Therefore, the embodiments are to be defined only by the scope of the appended claims.

In describing the embodiments of the present disclosure, if it is determined that detailed description of related known components or functions unnecessarily obscures the gist of the present disclosure, the detailed description thereof will be omitted. Further, the terminologies to be described below are defined in consideration of functions of the embodiments of the present disclosure and may vary depending on a user's or an operator's intention or practice. Accordingly, the definition thereof may be made on a basis of the content throughout the specification.

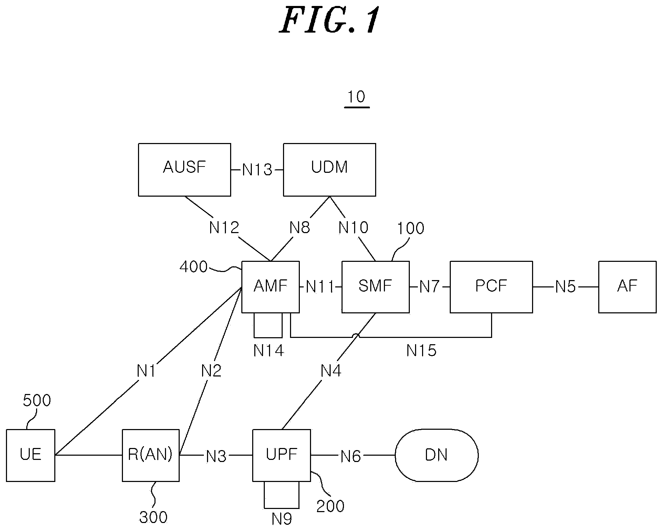

Fig. 1 shows a diagram conceptually illustrating an architecture 10 of the 5G communication system according to an embodiment.

The 5G communication system represented by the architecture 10 of Fig. 1 will be described. The 5G communication system is an advanced technology from a Long Tern Evolution (LTE) communication technology that is the 4th generation communication system. The 5G communication system is an expanded technology of the LTE communication technology and a new Radio Access Technology (RAT) through an evolution of an existing mobile communication network structure or a clean-state structure, and supports extended LTE (eLTE), non-3GPP access, and the like.

However, because the architecture 10 illustrated in **Fig.** 1 is just an example, the idea of the present disclosure is not interpreted as being limited to the architecture 10 illustrated in **Fig.** 1 nor the 5G communication system.

The architecture 10 includes various components (for example, a network function (NF)). Hereinafter, these components will be described.

Referring to **Fig.** 1, an Authentication Server Function (AUSF), a Policy Control Function (PCF), an Application Function (AF), Unified Data Management (UDM), a Data Network (DN), a Session Management Function (SMF) 100, a User Plane Function (UPF) 200, an (Radio) Access Network ((R)AN) 300 or a base station 300, an (Core) Access and Mobility Management Function (AMF) 400, and a User Equipment (UE) 500 are shown.

Among these components, the UPF 200 may be a component included in the User Plane in the 5G communication system, and may be referred to as the User Plane Function device 200 or the UPF 200 in the detailed description. Hereinafter, it will be referred to as the UPF 200.

In addition, the **SMF** 100 may be a component included in a Control Plane separated from the above-described User Plane in the 5G communication system, and may be referred to as the Session Management Function device 100 or the **SMF** 100 in the detailed description. Hereinafter, it will be referred to as the SMF 100.

The SMF 100 and the UPF 200 each performs not only publicly known functions performed by the 5G communication system, but also functions intended to be provided in an embodiment. Accordingly, hereinafter, description of the publicly known technology performed by each of the SMF 100 and the UPF 200 will be briefly described or skipped, and the functions intended to be provided in an embodiment will be described in more detail.

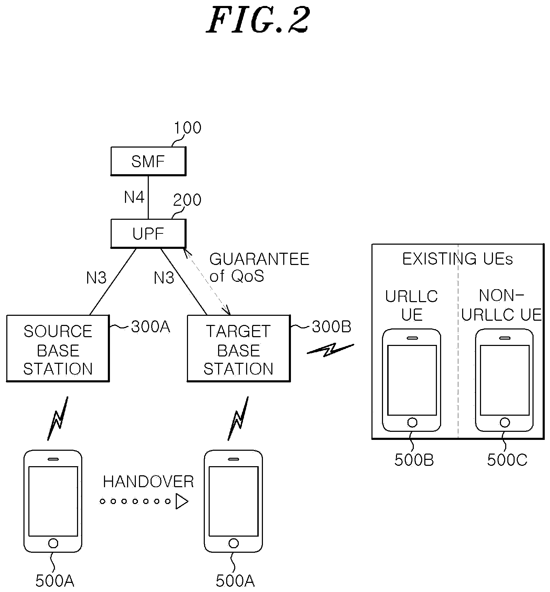

Fig. 2 shows a diagram illustrating a part of the architecture 10 of the 5G communication system illustrated in Fig. 1. Referring to Fig. 2, the SMF 100, the UPF 200, a source RAN (S-RAN) 300A, a target RAN (T-RAN) 300B and existing UEs 500B and 500C that are already connected to the T-RAN 300B are shown. The SMF 100 and the UPF 200 are connected through an N4 interface, and the UPF 200 is connected to each of the S-RAN 300A and the T-RAN 300B through an N3 interface.

A UE 500A shown in Fig. 2 accesses the S-RAN 300A and is provided with a URLLC service while using a resource of the S-RAN 300A. While the UE 500A receiving the URLLC service, handover from the S-RAN 300A to the T-RAN 300B may be performed for the UE 500A. Even after the handover, the UE 500A may be provided with the URLLC service of the same quality as before the handover. In other words, even after handover, the URLLC service may be provided to the UE 500A without interruption, and there may be no delay in terms of performance or a rate when the URLLC service is provided.

To this end, the T-RAN 300B may secure, at the time or before the handover for the UE 500A to the T-RAN 300B is completed, the same amount of the resource as was used by the UE 500A when accessing the S-RAN 300A.

Accordingly, according to an embodiment, when the SMF 100 receives handover information related to the UE 500A from the AMF 400, the SMF 100 obtains resource information about the resource that the UE 500A used while accessing the S-RAN 300A. After obtaining the resource information, the SMF 100 transmits, to the UPF 200, a request that a resource corresponding to the resource information is secured or prepared in the T-RAN 300B at the time of before the handover for the UE 500A to the T-RAN 300B is completed. If it is difficult to secure a sufficient resource in the T-RAN 300B due to the existing UEs 500B and 500C already connected to the T-RAN 300B, the SMF 100 takes action to secure the resource in the T-RAN 300B by cooperating with the UPF 200. As an example of the action, an action to withdraw or reduce a part of a resource allocated to the existing UEs 500B and 500C that are already connected to the T-RAN 300B or an action to transmit a request for handover for a part of the existing UEs 500B and 500C to another RAN other than the T-RAN 300B may be included. As an additional action, for example, an action to transmit a request for limit on access of a new UE to the T-RAN 300B may be included.

In other words, according to an embodiment, when the handover to the T-RAN 300B is performed for the UE 500A accessing the S-RAN 300A and receiving the URLLC service, the resource in the S-RAN 300A used to provide the URLLC service may be secured in the T-RAN 300B at the time or before the handover for the UE 500A is completed. Accordingly, even immediately after the handover, the URLLC service may be seamlessly provided to the UE 500A, and a delay may not occur in terms of performance or a rate when the URLLC service is provided. In other words, a URLLC service of the same quality as the URLLC service provided to the UE 500A before the handover is performed may be provided to the UE 500A even after the handover. In addition, as the resource is secured in the T-RAN 300B, a resource for supporting the URLLC service may be provided for other interfaces connected to the UPF 200, such as an N6 interface or an N9 interface.

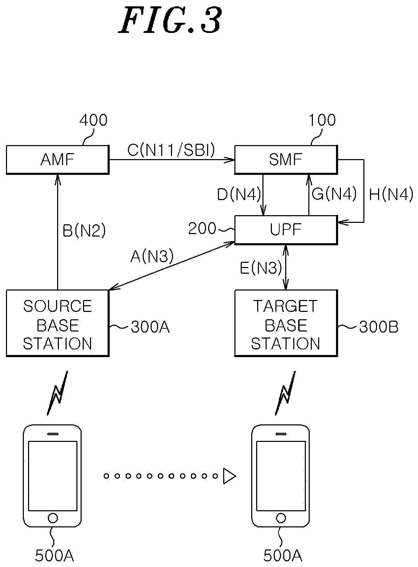

Hereinafter, with reference to **Fig.** 3, a procedure of a method of performing the above-described handover will be described in more detail.

Fig. 3 shows a flowchart illustrating a handover management method according to an embodiment. This handover management method is performed by the SMF 100 shown in Figs. 1 and 2. In addition, since what is shown in Fig. 3 is just an example, the idea of the present disclosure is not limited to that shown in Fig. 3.

Referring to Fig. 3, the SMF 100, the UPF 200, the S-RAN 300A, the T-RAN 300B, the AMF 400, and the UE 500A is shown.

The AMF 400 has information on a UE that has requested or is capable of receiving a URLLC service among a plurality of UEs connected to the S-RAN 300A, and provides this information to the S-RAN 300A. The S-RAN 300A provides the URLLC service to the UE 500A capable of receiving the URLLC service among the UEs accessing the S-RAN 300A based on this information received from the AMF 400.

At this time, a packet, which is a user plane packet, related to the URLLC service is transmitted and received between the UPF 200 and the S-RAN 300A through the N3 interface. Therefore, the packet is transmitted and received through the UPF 200. Accordingly, in a step A, the UPF 200 may obtain resource information about a resource of the S-RAN 300A used for transmitting and receiving the packet by monitoring the N3 interface.

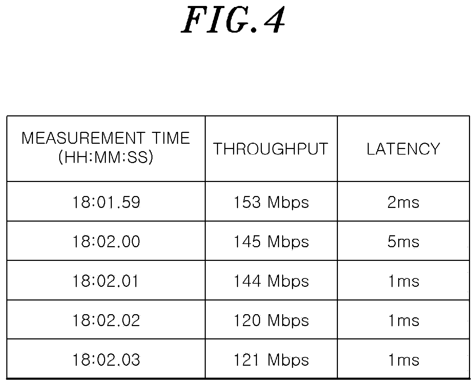

Fig. 4 shows a table illustrating the resource information related to the S-RAN 300A obtained by the UPF 200. Referring to Fig. 4, the time when the resource information is measured at the S-RAN 300A and the resource information measured at the time are shown. Herein, throughput and latency are shown as measurement targets in Fig. 4, but in addition, a bandwidth may also be measured and provided to the UPF 200 from the S-RAN 300A.

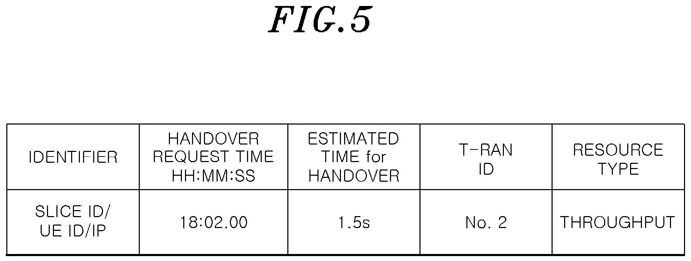

Referring back to Fig. 3, the S-RAN 300A monitors connection with the UE 500A and determines whether to perform handover for the UE 500A. If it is determined to perform the handover, in a step B, the S-RAN 300A transmits a handover support request to AMF 400 through an N2 interface. The step B may be performed in any one of a case in which the UE 500A prepares the handover, a case in which the handover is being executed, and a case where the handover is completed. In addition, various information may be transmitted from the S-RAN 300A to the AMF 400 together with the handover support request, which is illustrated in Fig. 5.

Referring to Fig. 5, at least one of an ID (or a slice ID) of the UE 500A for which the handover is to be performed, a session ID of the UE 500A, an IP address of the UE 500A, an ID of the T-RAN 300B, and time (or handover request time) when the handover support request is generated or made by the S-RAN 300A, estimated time for the handover, and types of the resource to be secured in the T-RAN 300B may be transmitted to the AMF 400 together with the handover support request, but is not limited thereto. In addition, although throughput is shown as the type of the resource to be secured in **Fig. 5****,** latency or a bandwidth may be further included in the type of the resource to be secured.

Referring back to **Fig.** 3, in a step C, the AMF 400 transmits handover information related to the UE 500A to the **SMF** 100 through an N11 interface or a service based interface (SBI).

The above-described handover information may include at least one of the above-described various information transmitted from the S-RAN 300A to the AMF 400 in the step B and information on whether a handover request is urgent. If the handover request is urgent, the **SMF** 100 may process the handover request urgently or in preference to other handover requests, and may take action for a resource to be preferentially secured in the T-RAN 300B prior to other handover requests.

Thereafter, the **SMF** 100 obtains, from the UPF 200, the resource information of the S-RAN 300A used by the UE 500A while receiving the URLLC service. The resource information obtained by the **SMF** 100 from the UPF 200 may be the same as described in Fig. **4****.**

In addition, the SMF 100 transmits, to the UPF 200, a request that a resource corresponding the resource information of the S-RAN 300A used by the UE 500A is to be secured in the T-RAN 300B, and the UPF 200 takes an action in response to the request to make the resource to be secured in the T-RAN 300B. Herein, there are two methods to perform the above process.

The first method is that when the SMF 100 determines overall situations related to securing the resource and determines an appropriate action, the UPF 200 just receives the action from the SMF 100 and executes the received action. In other words, in this case, the SMF 100 makes determination, whereas the UPF 200 does not make any determination but serves as a performer.

On the other hand, the second method is that the SMF 100 simply transmits, to the UPF 200, a request for securing the resource, and then the UPF 200 makes determination according to the request and determines an appropriate action to execute. In other words, in this case, the SMF 100 does not make any determination, but just transmits the request, whereas the UPF 200 makes determination and serves as the performer.

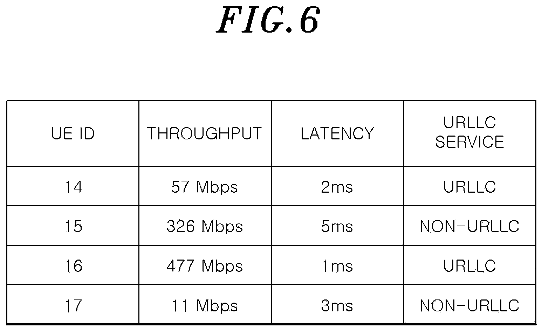

According to the first method among these, in a step D, the SMF 100 transmits a request for resource status information of the T-RAN 300B to the UPF 200 through the N4 interface. Thereafter, in a step E, the UPF 200 obtains the resource status information of the T-RAN 300B by monitoring the N3 interface between the UPF 200 and the T-RAN 300B. Fig. 6 shows a table illustrating the resource status information of the T-RAN 300B obtained by monitoring the N3 interface between the UPF 200 and the T-RAN 300B. Referring to Fig. 6, IDs of UEs accessing the T-RAN 300B, throughput and latency of each UE, and information on whether the URLLC service is provided to each UE may be included in the resource status information.

Referring back to Fig. 3, in a step G, the UPF 200 provides the resource status information of the T-RAN 300B obtained in the step E to the SMF 100 through the N4 interface. Thereafter, the SMF 100 compares the resource information of the S-RAN 300A used by the UE 500A with the resource status information of the T-RAN 300B.

According to the result of the comparison, a sufficient resource may be secured in the T-RAN 300B. In this case, in a step H, the SMF 100 transmits, to the UPF 200 through the N4 interface, a request that the T-RAN 300B maintains such a state (a state in which the resource is sufficiently secured) .

Then, the UPF 200 performs operations related to, for example, a PDR, a FAR, a QER, etc. so that the T-RAN 300B maintains such the state. As a result of performing the operations, access of a new UE may be limited in the T-RAN 300B thereafter, or there may be rate limiting even if the access is allowed.

However, according to the result of the comparison, a sufficient resource may not be secured in the T-RAN 300B. In this case, the SMF 100 determines an action to be transmitted to the UPF 200 in order to secure the resource, for example, an action related to control over the PDR, the FAR, the QER, etc. An example of the action may include an action to withdraw or reduce a part of the resource allocated to the existing the UEs 500B and 500C already connected to the T-RAN 300B, or an action to transmit a request for handover for some of the existing UEs 500B and 500C to another RAN other than the T-RAN 300B. Herein, the existing UE for which a part of the resource is withdrawn or that is a target for the handover to another RAN may be a UE not provided with the URLLC service (referred to as a non-URLLC UE 500C). At this time, whether each of the existing UE 500B and 500C is provided with the URLLC service may be identified through the information shown in Fig. 6, that is, the information that the SMF 100 received from the UPF 200 in the step G.

The determined action is transmitted from the SMF 100 to the UPF 200, and the UPF 200 performs a predetermined operation based on the received action so that the resource may be secured in the T-RAN 300B. In addition, as the resource is secured in the T-RAN 300B, a resource for supporting the URLLC service may be provided for other interfaces connected to the UPF 200, for example, the N6 interface or the N9 interface.

Next, according to the second method, in the step D, the SMF 100 transmits a request for securing the resource in the T-RAN 300B to the UPF 200 through the N4 interface. While transmitting the request, the SMF 100 further transmits, to the UPF 200, the resource information of the S-RAN 300A used by the UE 500A while receiving the URLLC service. Then, in the step E, the UPF 200 obtains the resource status information of the T-RAN 300B by monitoring the N3 interface between the UPF 200 and the T-RAN 300B. Herein the obtained resource status information is as shown in Fig. 6.

Referring back to Fig. 3, the UPF 200 compares the resource information of the S-RAN 300A used by the UE 500A with the resource status information of the T-RAN 300B.

As the result of the comparison, a sufficient resource may be secured in the T-RAN 300B. In this case, the UPF 200 performs operations related to, for example, the PDR, the FAR, and the QER so that the T-RAN 300B maintains such the state (the state in which the resource is sufficiently secured). Accordingly, access of a new UE may be limited in the T-RAN 300B thereafter and there may be rate limiting.

However, as the result of the comparison, a sufficient resource may not be secured in the T-RAN 300B. In this case, the UPF 200 determines a predetermined action for securing the resource (for example, the action related to control over the PDR, the FAR, the QER, etc.) and then performs a predetermined operation based on the determined action so that the resource may be secured in the T-RAN 300B. An example of the action for this method is the same as the first method. In addition, as the resource is provided in the T-RAN 300B, a resource for supporting the URLLC service may be provided for other interfaces connected to the UPF 200, for example, the N6 interface or the N9 interface.

According to the above-described two methods, the resource information of the S-RAN 300A used by the UE 500A while receiving the URLLC service is compared with the resource status information of the T-RAN 300B. At this time, the resource information of the S-RAN 300A to be compared may be resource information measured during a predetermined period prior to the time of the handover request (that the SMF 100 was received from the AMF 400 in the step C), and any one of a maximum value, a minimum value, or an average value of the resource information measured during the predetermined period may be a reference of the resource to be secured in the T-RAN 300B.

Herein, whether the resource information is measured during the predetermined period prior to the time of the handover request may be identified based on the 'measurement time' for each resource information shown in Fig. **4****.**

In addition, in the step C, information on the estimated time for performing the handover may be transmitted to the SMF 100. The UPF 200 may control the T-RAN 300B so that a process of securing the predetermined resource in the T-RAN 300B may be performed within the estimated time for performing the handover.

Herein, each of the steps B, C, D, G and H is performed on a Control Plane.

As described above, according to an embodiment, when the handover for a UE receiving the URLLC service by accessing the S-RAN 300A is performed to the T-RAN 300B, the resource in the S-RAN 300A used to provide the URLLC service may be secured in the T-RAN 300B at the time or before the handover for the UE is completed. Accordingly, even immediately after the handover, the URLLC service may be seamlessly provided to the UE, and a delay may not occur in terms of performance or a rate when the URLLC service is provided. In other words, a URLLC service having the same quality as the URLLC service provided to the UE before the handover is performed may be provided even after the handover. In addition, as the resource is provided in the T-RAN 300B, the resource for supporting the URLLC service may be provided for other interfaces connected to the UPF, such as the N6 interface or the N9 interface.

On the other hand, the disclosure related to the above-described handover management method may be implemented in a form of a computer-readable storage medium storing a computer program programmed to perform each step included in the handover management method or the computer program, stored in the computer-readable storage medium, programmed to perform each step included in the handover management method.

According to an embodiment, a URLLC service having the same quality as the URLLC service provided to the UE before the handover is performed may be provided even after the handover.

As described above, those skilled in the art will understand that the present disclosure can be implemented in other forms without changing the technical idea or essential features thereof. Therefore, it should be understood that the above-described embodiments are merely examples, and are not intended to limit the present disclosure. The scope of the present disclosure is defined by the accompanying claims rather than the detailed description

## Claims

1. A handover management method performed by a session management function, SMF (100) in 5G communication system, the method comprising:
receiving, from an access and mobility management function, AMF (400), handover information related to a user equipment, UE (500A), receiving a predetermined service by accessing a source radio access network, S-RAN (300A), wherein the received handover information includes time information on a time at which handover is requested;
obtaining from a user plane function, UPF (200), after receiving the handover information, resource information on a resource used when the predetermined service is provided to the UE (500A) at the S-RAN (300A), wherein the resource information used at the S-RAN (300A) is obtained during a period prior, by a predetermined time, to the time at which the handover is requested; and
transmitting, to the UPF (200), a request that a resource corresponding to the obtained resource information is to be secured in a target radio access network, T-RAN (300B).

2. The method of claim 1, wherein the obtained resource information includes at least one of throughput, latency, and a bandwidth between the S-RAN (300A) and the UE (500A) measured when the predetermined service is provided to the UE (500A).

3. The method of claim 1, wherein the receiving the handover information is receiving at least one of types of the resource to be secured in the T-RAN (300B), and estimated time information on handover for the UE (500A).

4. The method of claim 1, further comprising:
receiving resource status information of the T-RAN (300B) from the UPF (200) after receiving the handover information, and
wherein the transmitting the request to the UPF (200) includes:
comparing the obtained resource information with the received resource status information of the T-RAN (300B);
drawing, based on a result of the comparison, action to secure a resource corresponding to the obtained resource information in the T-RAN (300B); and
transmitting, to the UPF (200), a request for operation of the drawn action.

5. The method of claim 4, wherein the resource status information of the T-RAN (300B) received from the UPF (200) includes at least one of throughput, latency, and a bandwidth between the T-RAN (300B) and a UE (500A) accessing the T-RAN (300B), and information on whether an ultra-reliable and low latency communications, URLLC, service is being provided to the UE (500A) accessing the T-RAN (300B).

6. The method of claim 1, wherein the transmitting the request to the UPF (200) is transmitting, to the UPF (200), a request that when handover for the UE (500A) to the T-RAN (300B) is performed, a resource corresponding to resource information having a maximum value among the obtained resource information is to be secured in the T-RAN (300B).

7. The method of claim 1, wherein the transmitting the request to the UPF (200) is transmitting, to the UPF (200), at least one of a request for reducing a resource of the T-RAN (300B) allocated to a part of UEs accessing the T-RAN (300B), a request for handover for the part of the UEs to another radio access network other than the T-RAN (300B), and a request for limit on additional access of a UE (500A) to the T-RAN (300B).

## Patentansprüche

1. Übergabemanagementverfahren, ausgeführt durch eine Sitzungsmanagementfunktion (SMF) (100) in einem 5G-Kommunikationssystem, wobei das Verfahren umfasst:
Empfangen, von einer Zugangs- und Mobilitätsmanagementfunktion (AMF) (400), von Übergabe-Informationen, die sich auf eine Benutzerausrüstung (UE) (500A) beziehen, die einen zuvor festgelegten Dienst durch Zugreifen auf ein Quellen-Funkzugangsnetz (S-RAN) (300A) empfängt, wobei die empfangenen Übergabe-Informationen Zeitinformationen über einen Zeitpunkt enthalten, an dem eine Übergabe angefordert wird;
Erhalten von einer Nutzerebenenfunktion (UPF) (200), nach dem Empfangen der Übergabe-Informationen, von Ressourcen-Informationen über eine Ressource, die verwendet wird, wenn der zuvor festgelegte Dienst für die UE (500A) in dem S-RAN (300A) erbracht wird, wobei die Ressourcen-Informationen, die in dem S-RAN (300A) verwendet werden, während eines Zeitraums erhalten werden, der um eine zuvor festgelegte Zeit vor dem Zeitpunkt liegt, an dem die Übergabe angefordert wird; und
Senden, an die UPF (200), einer Anforderung, dass eine Ressource, die den erhaltenen Ressourcen-Informationen entspricht, in einem Ziel-Funkzugangsnetz (T-RAN) (300B) gesichert werden soll.

2. Verfahren nach Anspruch 1, wobei die erhaltenen Ressourcen-Informationen mindestens eines von Durchsatz, Latenz und einer Bandbreite zwischen dem S-RAN (300A) und der UE (500A) enthalten, die gemessen werden, wenn der zuvor festgelegte Dienst für die UE (500A) erbracht wird.

3. Verfahren nach Anspruch 1, wobei das Empfangen der Übergabe-Informationen bedeutet, mindestens einen von Typen der in dem T-RAN (300B) zu sichernder Ressource und geschätzte ZeitInformationen bezüglich der Übergabe für die UE (500A) zu empfangen.

4. Verfahren nach Anspruch 1, des Weiteren umfassend:
Empfangen von Ressourcenstatus-Informationen des T-RAN (300B) von der UPF (200) nach dem Empfangen der Übergabe-Informationen, und
wobei das Senden der Anforderung an die UPF (200) umfasst:
Vergleichen der erhaltenen Ressourcen-Informationen mit den empfangenen Ressourcenstatus-Informationen des T-RAN (300B);
Festlegen, auf der Grundlage eines Ergebnisses des Vergleichs, einer Maßnahme zum Sichern einer Ressource, die den erhaltenen Ressourcen-Informationen entspricht, in dem T-RAN (300B); und
Senden, an die UPF (200), einer Anforderung zum Ausführen der festgelegten Maßnahme.

5. Verfahren nach Anspruch 4, wobei die von der UPF (200) empfangenen Ressourcenstatus-Informationen des T-RAN (300B) mindestens eines von Durchsatz, Latenz und einer Bandbreite zwischen dem T-RAN (300B) und einer auf das T-RAN zugreifenden UE (500A) (300B) und Informationen darüber, ob ein Ultra-Reliable and Low Latency Communications (URLLC)-Dienst für die auf das T-RAN (300B) zugreifende UE (500A) bereitgestellt wird.

6. Verfahren nach Anspruch 1, wobei das Senden der Anforderung an die UPF (200) bedeutet, an die UPF (200) eine Anforderung zu senden, dass, wenn eine Übergabe für die UE (500A) an das T-RAN (300B) durchgeführt wird, eine Ressource, die Ressourcen-Informationen mit einem Maximumwert unter den erhaltenen Ressourcen-Informationen entspricht, in dem T-RAN (300B) gesichert wird.

7. Verfahren nach Anspruch 1, wobei das Senden der Anforderung an die UPF (200) bedeutet, mindestens eines von einer Anforderung zum Reduzieren einer Ressource des T-RAN (300B), die einem Teil von UEs zugewiesen ist, die auf das T-RAN (300B) zugreifen, einer Anforderung zur Übergabe für den Teil der UEs an ein anderes Funkzugangsnetz als das T-RAN (300B), und einer Anforderung zum Begrenzen eines weiteren Zugriffs einer UE (500A) auf das T-RAN (300B) an die UPF (200) zu senden.

## Revendications

1. Procédé de gestion de transfert intercellulaire effectué par une fonction de gestion de session, SMF (100) dans un système de communication 5G, le procédé comprenant :
la réception, à partir d'une fonction de gestion de l'accès et de la mobilité (AMF) (400), d'informations de transfert intercellulaire relatives à un équipement utilisateur (UE)(500A), recevant un service prédéterminé en accédant à un réseau d'accès radio source (S-RAN) (300A), dans lequel les informations de transfert intercellulaire reçues comportent des informations temporelles sur un moment où un transfert est demandé ;
l'obtention, à partir d'une fonction de plan utilisateur (UPF) (200), après réception des informations de transfert intercellulaire, d'informations de ressource sur une ressource utilisée lorsque le service prédéterminé est fourni à l'UE (500A) au niveau du S-RAN (300A), dans lequel les informations de ressource utilisées au niveau du S-RAN (300A) sont obtenues pendant une période antérieure, d'un temps prédéterminé, au moment où le transfert est demandé ; et
la transmission, à l'UPF (200), d'une demande visant à réserver, dans un réseau d'accès radio cible (T-RAN) (300B), une ressource correspondant aux informations de ressource obtenues.

2. Procédé selon la revendication 1, dans lequel les informations de ressources obtenues comportent au moins l'un parmi débit, latence, et bande passante entre le S-RAN (300A) et l'UE (500A), mesurés lorsque le service prédéterminé est fourni à l'UE (500A).

3. Procédé selon la revendication 1, dans lequel la réception des informations de transfert intercellulaire consiste à recevoir au moins l'un des types de la ressource à réserver dans le T-RAN (300B), et des informations de temps estimé sur le transfert intercellulaire pour l'UE (500A).

4. Procédé selon la revendication 1, comprenant en outre :
la réception d'informations d'état de ressource du T-RAN (300B) à partir de l'UPF (200) après avoir reçu les informations de transfert intercellulaire, et
dans lequel la transmission de la demande à l'UPF (200) comporte :
la comparaison des informations de ressource obtenues avec les informations d'état de ressource reçues du T-RAN (300B) ;
en fonction d'un résultat de la comparaison, le fait de définir des mesures pour réserver une ressource correspondant aux informations de ressource obtenues dans le T-RAN (300B) ; et
la transmission, à l'UPF (200), d'une demande d'exécution des mesures définies.

5. Procédé selon la revendication 4, dans lequel les informations d'état de ressource du T-RAN (300B) reçues à partir de l'UPF (200) comportent au moins l'un parmi débit, latence, et bande passante entre le T-RAN (300B) et un UE (500A) accédant au T-RAN (300B), et des informations indiquant si un service de communication ultra-fiable et à faible latence (URLLC) est fourni à l'UE (500A) accédant au T-RAN (300B).

6. Procédé selon la revendication 1, dans lequel la transmission de la demande à l'UPF (200) consiste à transmettre, à l'UPF (200), une demande indiquant que, lorsque le transfert intercellulaire pour l'UE (500A) vers le T-RAN (300B) est effectué, une ressource correspondant à des informations de ressource présentant une valeur maximale parmi les informations de ressource obtenues doit être réservée dans le T-RAN (300B).

7. Procédé selon la revendication 1, dans lequel la transmission de la demande à l'UPF (200) consiste à transmettre, à l'UPF (200), au moins une demande parmi une demande de réduction d'une ressource du T-RAN (300B) allouée à une partie des UE accédant au T-RAN (300B), une demande de transfert intercellulaire pour la partie des UE vers un autre réseau d'accès radio autre que le T-RAN (300B), et une demande de limitation d'accès supplémentaire d'un UE (500A) au T-RAN (300B).
